# EUROPEAN PATENT SPECIFICATION

(11) **EP 3 386 169 B1**
(45) Date of publication and mention of the grant of the patent: **03.02.2021**
(21) Application number: 16880914.3
(22) Date of filing: 08.12.2016
(51) Int. Cl.: H04L 29/08, H04L 29/12, H04W 8/26, H04W 80/04

(54) **ADDRESS ALLOCATION METHOD, GATEWAY AND SYSTEM**
ADRESSENZUWEISUNGSVERFAHREN, GATEWAY UND SYSTEM
PROCÉDÉ D'ATTRIBUTION D'ADRESSE, PASSERELLE ET SYSTÈME

(30) Priority: 31.12.2015 CN 201511030225
(43) Date of publication of application: 10.10.2018
(73) Proprietor: Huawei Technologies Co., Ltd., Longgang District Shenzhen, Guangdong 518129 (CN)
(72) Inventor: LI, Dong, Shenzhen Guangdong 518129 (CN); ZHOU, Han, Shenzhen Guangdong 518129 (CN); XU, Jian, Shenzhen Guangdong 518129 (CN); SUN, Jianwei, Shenzhen Guangdong 518129 (CN); SUN, Xiaodong, Shenzhen Guangdong 518129 (CN); SU, Yan, Shenzhen Guangdong 518129 (CN)
(74) Representative: Körber, Martin Hans
(86) International application number: PCT/CN2016/109048
(87) International publication number: WO 2017/114124

(56) References cited:
- WO-A1-2014/159962
- WO-A2-2014/085761
- CN-A- 101 984 632
- CN-A- 102 256 236
- CN-A- 102 833 723
- CN-A- 104 335 553
- CN-A- 105 554 178
- US-A1- 2015 052 234
- US-A1- 2015 103 780
- ERICSSON: "Functional split", 3GPP DRAFT; S2-153863_CUPS_FUNCTIONAL_SPLIT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Anaheim, California, USA; 20151116 - 20151120 16 November 2015 (2015-11-16), XP051013949, Retrieved from the Internet: URL:http://www.3gpp.org/ftp/Meetings_3GPP_ SYNC/SA2/Docs/ [retrieved on 2015-11-16]

## Description

### TECHNICAL FIELD

The present invention relates to the field of wireless communications technologies, and in particular, to an address assignment method, a gateway, and a system.

### BACKGROUND

After a conventional gateway is separated into a control plane gateway (CGW, Controller Gateway) and a distributed gateway (DGW, Distributed Gateway), the CGW is responsible for delivering control signaling, scheduling address assignment for a managed DGW, and assigning an Internet Protocol (IP, Internet Protocol) address to a terminal device; and the DGW is responsible for data transmission. Currently, the following two technical solutions are mainly used for address assignment and address management for a terminal device:

In a first solution, user access signaling in a distributed gateway is mainly processed by a CGW; the CGW defines a function and defines a user plane data processing manner for a DGW by using an S18 interface; the CGW assigns addresses to all terminal devices and manages all the addresses in a centralized manner; and the DGW maintains no address, and only needs to maintain and publish routing information of a current terminal device, so that another device can locate the terminal device. However, because an IP address is randomly and disorderly assigned to the terminal device, and the CGW manages a relatively large quantity of DGWs, when a quantity of terminal devices increases, a case in which IP addresses of many terminal devices belonging to one DGW respectively belong to different network segments may occur. In addition, the DGW needs to maintain routing information of the terminal devices at the same time. When the quantity of terminal devices continues to increase, a case in which IP addresses of terminal devices in a same network segment belong to different DGWs may further occur. Consequently, the DGW needs to maintain a plurality of routing tables, greatly reducing running efficiency of an entire link, and increasing network complexity. This may be uncontrollable.

In a second solution, a DGW assigns addresses to all terminal devices and manages the addresses of the terminal devices in a centralized manner, and maintains routing notifications of managed terminal devices. After a relatively large quantity of terminal devices are successfully attached, the terminal devices are attached to DGWs to which the terminal devices respectively belong. However, because there is no signaling exchanged between DGWs, when too many terminal devices cause an increase in load of a DGW, the DGW cannot perform a load balancing operation with a surrounding idle DGW. Consequently, a terminal device that requests attachment subsequently cannot be successfully attached, and address segment resource utilization of an entire system is reduced.

Neither of the foregoing two solutions can implement proper and dynamic address resource assignment.

US 2015/0052234 A1 discloses measures for centralized IP address management for distributed gateways. Such measures exemplarily comprise management of IP addresses for hosts being linked with a plurality of distributed gateway entities via a first host-specific tunnel at a centralized controller entity, and control of the plurality of distributed gateway entities in terms of Internet protocol address management from the centralized controller entity via a second host-specific tunnel on the basis of the managed Internet protocol addresses for the hosts. Accordingly, control-plane and user-plane functions may be separated between the centralized controller entity and the plurality of distributed gateway entities.

### SUMMARY

The present invention provides an address assignment method, a gateway, and a system, so as to resolve a problem of relatively low link utilization that is caused by improper address assignment by a DGW in an existing mechanism.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

A first aspect of the present invention provides an address assignment method. The method includes:
obtaining, by a control network element, first weight information of a first distributed gateway DGW, and assigning a first address segment to the first DGW according to the first weight information; and
sending, by the control network element, address segment information of the first address segment to the first DGW.

In some possible designs, the method further includes:
receiving, by the control network element, a first message sent by a mobility management entity MME, where the first message is used to indicate that a terminal device requests to obtain an Internet Protocol IP address; and
obtaining, by the control network element, a destination IP address assigned by the first DGW to the terminal device, and returning, to the MME, a second message carrying the destination IP address.

In some possible designs, the obtaining, by the control network element, a destination IP address assigned by the first DGW to the terminal device, and returning, to the MME, a second message carrying the destination IP address includes one of the following:
if it is the first time that the first DGW assigns an IP address to the terminal device after the first DGW is powered on, adding, by the control network element, a starting address of the first address segment as the destination IP address to the second message, and returning the second message to the MME; or
if it is not the first time that the first DGW assigns an IP address, sending, by the control network element, a third message to the first DGW, where the third message is used to instruct the first DGW to assign the destination IP address to the terminal device; and after receiving a fourth message that is returned by the first DGW and that carries the destination IP address, returning, by the control network element to the MME, the second message carrying the destination IP address.

In some possible designs, for example, in a scenario with a DHCP server, the address segment information of the first address segment includes an identifier of the first address segment; and after the assigning a first address segment to the first DGW according to the first weight information, the method further includes:
sending, by the control network element, the address segment information of the first address segment to the Dynamic Host Configuration Protocol DHCP server, so that the DHCP server specifies the first address segment in an address resource pool according to the address segment information of the first address segment.

In some possible designs, the method further includes one of the following:
obtaining, by the control network element, the identifier of the first address segment from the DHCP server, and after receiving a first request message sent by the MME, obtaining, from the DHCP server according to the identifier of the first address segment, the destination IP address assigned to the terminal device, and returning the destination IP address to the MME; or
obtaining, by the control network element, the identifier of the first address segment from the DHCP server, and sending the identifier of the first address segment to the first DGW, so that after receiving a fifth message sent by the terminal device, the first DGW obtains, from the DHCP server according to the identifier of the first address segment, the destination IP address assigned to the terminal device, and returns the destination IP address to the terminal device.

In some possible designs, the control network element includes a control plane gateway CGW and an operation management OM entity; the first address segment is assigned by the OM entity to the first DGW according to the first weight information; the address segment information of the first address segment is sent by the OM entity to the DHCP server; the identifier of the first address segment is obtained by the OM entity from the DHCP server; and the first weight information is obtained by the CGW from the first DGW.

In some possible designs, the identifier of the first address segment includes a proxy IP address of the DHCP server or a starting address of the first address segment.

In some possible designs, the method further includes:
when determining that there is an idle address segment in the first address segment, performing, by the control network element, at least one of the following:
releasing the idle address segment; or
assigning the idle address segment to a DGW that is managed by the control network element and that has an urgent address requirement; or
re-assigning a new address segment to the first DGW according to address usage of the first DGW.

In some possible designs, the method further includes:
obtaining, by the control network element, second weight information of a second DGW, and when determining that a remaining address segment resource in address segment resources is insufficient to assign an address segment corresponding to the second weight information, and there is the idle address segment in the first address segment, releasing the idle address segment in the first address segment, and assigning the idle address segment in the first address segment to the second DGW.

In some possible designs, the method further includes one of the following:
periodically obtaining, by the control network element, usage of address segments of all managed DGWs, and when determining that a preset update triggering condition is satisfied, re-assigning new address segments to some or all of the managed DGWs according to the usage of the address segments of all the managed DGWs;
obtaining, by the control network element, usage of address segments of all managed DGWs before a preset congestion time period is reached, and when determining that a preset update triggering condition is satisfied, re-assigning new address segments to some or all of the managed DGWs according to the usage of the address segments of all the managed DGWs;
receiving, by the control network element, a sixth message sent by the first DGW, and assigning a new address segment to the first DGW according to the sixth message;
obtaining, by the control network element, new weight information of the first DGW, and re-assigning a new address segment to the first DGW according to the new weight information; or
after being reset or recovered from a fault, receiving and storing, by the control network element, usage of the first address segment that is sent by the first DGW.

In some possible designs, the assigning, by a control network element, a first address segment to the first DGW according to the first weight information, and the obtaining, by the control network element, the identifier of the first address segment from the DHCP server, and sending the identifier of the first address segment to the first DGW specifically include:
obtaining, by the CGW in the control network element, the first weight information of the first DGW, and sending the first weight information to the OM entity in the control network element;
assigning, by the OM entity in the control network element, the first address segment to the first DGW in the DHCP server according to the first weight information, and sending the identifier of the first address segment that is obtained from the DHCP server to the CGW; and
sending, by the CGW in the control network element, the received identifier of the first address segment to the first DGW, so that after receiving a second request message sent by the terminal device, the first DGW obtains, from the DHCP server according to the identifier of the first address segment, the destination IP address assigned to the terminal device, and returns the destination IP address to the terminal device.

A second aspect of this application provides an address assignment method. The method includes:
sending, by a first distributed gateway DGW, first weight information of the first DGW to a control network element, so that the control network element assigns a corresponding first address segment to the first DGW according to the first weight information; and
receiving, by the first DGW, address segment information of the first address segment that is returned by the control network element.

In some possible designs, the method further includes:
receiving, by the first DGW, a third message sent by the control network element, assigning a destination IP address to a terminal device according to the third message, and sending, to the control network element, a fourth message carrying the destination IP address, so that the control network element adds the destination IP address to a second message and returns the second message to a mobility management entity MME.

In some possible designs, the method further includes:
after receiving a fifth message sent by the terminal device, obtaining, by the first DGW from the DHCP server according to an identifier of the first address segment, the destination IP address assigned to the terminal device, and returning the destination IP address to the terminal device.

In some possible designs, the address segment information of the first address segment includes the identifier of the first address segment, and the identifier of the first address segment includes a proxy IP address of the DHCP server or a starting address of the first address segment.

In some possible designs, the method further includes one of the following:
periodically sending, by the first DGW, usage of the first address segment to the control network element, so that when determining that there is an idle address segment in the first address segment, the control network element releases the idle address segment, or assigns the idle address segment to a DGW that is managed by the control network element and that has an urgent address requirement, or re-assigns a new address segment to the first DGW according to address usage of the first DGW;
sending, by the first DGW, a sixth message to the control network element, where the sixth message is used to request the control network element to assign a new address segment to the first DGW;
after the control network element is reset or recovered from a fault, sending, by the first DGW, usage of the first address segment to the control network element; or
periodically counting, by the first DGW, a quantity of terminal devices accessing the first DGW, and when determining that the first address segment cannot meet a requirement of the terminal device, sending new weight information to the control network element, so that the control network element re-assigns a new address segment to the first DGW.

A third aspect of this application provides a control network element. The control network element includes:
a receiving module, configured to obtain first weight information of a first distributed gateway DGW;
a processing module, configured to assign a first address segment to the first DGW according to the first weight information received by the receiving module; and
a sending module, configured to send address segment information of the first address segment to the first DGW

In some possible designs, the receiving module is further configured to: receive a first message sent by a mobility management entity MME, where the first message is used to indicate that a terminal device requests to obtain an Internet Protocol IP address; and obtain a destination IP address assigned by the first DGW to the terminal device; and
the sending module is further configured to return, to the MME, a second message carrying the destination IP address obtained by the receiving module.

In some possible designs, the processing module is further configured to perform one of the following:
if it is the first time that the first DGW assigns an IP address to the terminal device after the first DGW is powered on, adding a starting address of the first address segment as the destination IP address to the second message, and returning the second message to the MME by using the sending module; or
if it is not the first time that the first DGW assigns an IP address, sending a third message to the first DGW by using the sending module, where the third message is used to instruct the first DGW to assign the destination IP address to the terminal device; and after receiving, by using the receiving module, a fourth message that is returned by the first DGW and that carries the destination IP address, returning, to the MME by using the sending module, the second message carrying the destination IP address.

In some possible designs, the address segment information of the first address segment includes an identifier of the first address segment, and the sending module is further configured to:
send the address segment information of the first address segment to a Dynamic Host Configuration Protocol DHCP server, so that the DHCP server specifies the first address segment in an address resource pool according to the address segment information of the first address segment.

In some possible designs, the processing module is further configured to perform one of the following steps:
obtaining the identifier of the first address segment from the DHCP server by using the receiving module, and after receiving, by using the receiving module, a first request message sent by the MME, obtaining, from the DHCP server according to the identifier of the first address segment, the destination IP address assigned to the terminal device, and returning the destination IP address to the MME by using the sending module; or
obtaining the identifier of the first address segment from the DHCP server by using the receiving module, and sending the identifier of the first address segment to the first DGW by using the sending module, so that after receiving a fifth message sent by the terminal device, the first DGW obtains, from the DHCP server according to the identifier of the first address segment, the destination IP address assigned to the terminal device, and returns the destination IP address to the terminal device.

In some possible designs, the identifier of the first address segment includes a proxy IP address of the DHCP server or a starting address of the first address segment.

In some possible designs, when determining that there is an idle address segment in the first address segment, the processing module is further configured to perform at least one of the following:
releasing the idle address segment; or
assigning the idle address segment to a DGW that is managed by the control network element and that has an urgent address requirement; or
re-assigning a new address segment to the first DGW according to address usage of the first DGW.

In some possible designs, the processing module is further configured to:
obtain, by using the receiving module, second weight information of a second DGW, and when determining that a remaining address segment resource in address segment resources is insufficient to assign an address segment corresponding to the second weight information, and there is the idle address segment in the first address segment, release the idle address segment in the first address segment, and assign the idle address segment in the first address segment to the second DGW.

In some possible designs, the processing module is further configured to perform one of the following steps:
periodically obtaining, by using the receiving module, usage of address segments of all managed DGWs, and when determining that a preset update triggering condition is satisfied, re-assigning new address segments to some or all of the managed DGWs according to the usage of the address segments of all the managed DGWs;
obtaining, by using the receiving module, usage of address segments of all managed DGWs before a preset congestion time period is reached, and when determining that a preset update triggering condition is satisfied, re-assigning new address segments to some or all of the managed DGWs according to the usage of the address segments of all the managed DGWs;
receiving, by using the receiving module, a sixth message sent by the first DGW, and assigning a new address segment to the first DGW according to the sixth message;
obtaining, by using the receiving module, new weight information of the first DGW, and re-assigning a new address segment to the first DGW according to the new weight information; or
after the control network element is reset or recovered from a fault, receiving and storing, by using the receiving module, usage of the first address segment that is sent by the first DGW.

The control network element has a function of implementing an action of the control network element in the foregoing method designs. The function may be implemented by hardware, or may be implemented by executing corresponding software by hardware. The hardware or software includes one or more modules corresponding to the foregoing function. The module may be software and/or hardware.

A fourth aspect of the present invention provides a first distributed gateway. The first distributed gateway includes:
a sending module, configured to send first weight information of the first distributed gateway to a control network element, so that the control network element assigns a corresponding first address segment to the first DGW according to the first weight information; and
a receiving module, configured to receive address segment information of the first address segment that is returned by the control network element.

In some possible designs, the first distributed gateway further includes:
a processing module, configured to: receive, by using the receiving module, a third message sent by the control network element, assign a destination IP address to a terminal device according to the third message, and send, to the control network element by using the sending module, a fourth message carrying the destination IP address, so that the control network element adds the destination IP address to a second message and returns the second message to a mobility management entity MME.

In some possible designs, the processing module is further configured to:
after receiving, by using the receiving module, a fifth message sent by the terminal device, obtain, from a DHCP server according to an identifier of the first address segment, the destination IP address assigned to the terminal device, and return the destination IP address to the terminal device by using the sending module.

In some possible designs, the address segment information of the first address segment includes the identifier of the first address segment, and the identifier of the first address segment includes a proxy IP address of the DHCP server or a starting address of the first address segment.

In some possible designs, the processing module is further configured to perform one of the following:
periodically sending usage of the first address segment to the control network element by using the sending module, so that when determining that there is an idle address segment in the first address segment, the control network element releases the idle address segment, or assigns the idle address segment to a DGW that is managed by the control network element and that has an urgent address requirement, or re-assigns a new address segment to the first DGW according to address usage of the first DGW;
sending a sixth message to the control network element by using the sending module, where the sixth message is used to request the control network element to assign a new address segment to the first DGW;
after the control network element is reset or recovered from a fault, sending usage of the first address segment to the control network element by using the sending module; or
periodically counting a quantity of terminal devices accessing the first DGW, and when determining that the first address segment cannot meet a requirement of the terminal device, sending new weight information to the control network element by using the sending module, so that the control network element re-assigns a new address segment to the first DGW.

The distributed gateway has a function for implementing an action of the distributed gateway in the foregoing method designs. The function may be implemented by hardware, or may be implemented by executing corresponding software by hardware. The hardware or software includes one or more modules corresponding to the foregoing function. The module may be software and/or hardware.

A fifth aspect of the present invention provides a communications system. The communications system includes:
the control network element according to any one of the third aspect or the possible designs of the third aspect; and
the distributed gateway according to any one of the fourth aspect or the possible designs of the fourth aspect.

Compared with the existing mechanism, in the present invention, the control network element assigns the first address segment to the first DGW according to the weight information of the first DGW, so that proper address segment assignment is implemented, and address resource utilization is improved.

### BRIEF DESCRIPTION OF DRAWINGS

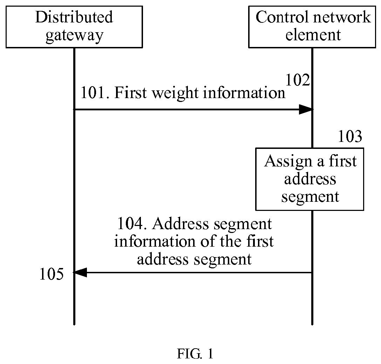

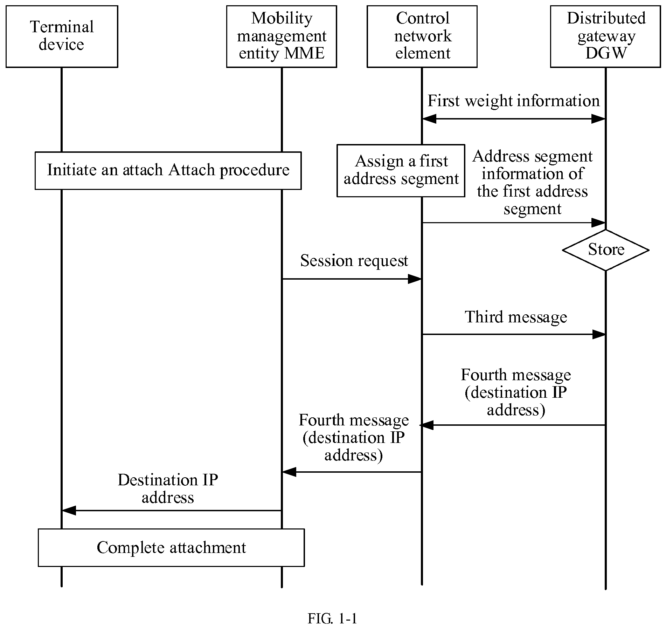

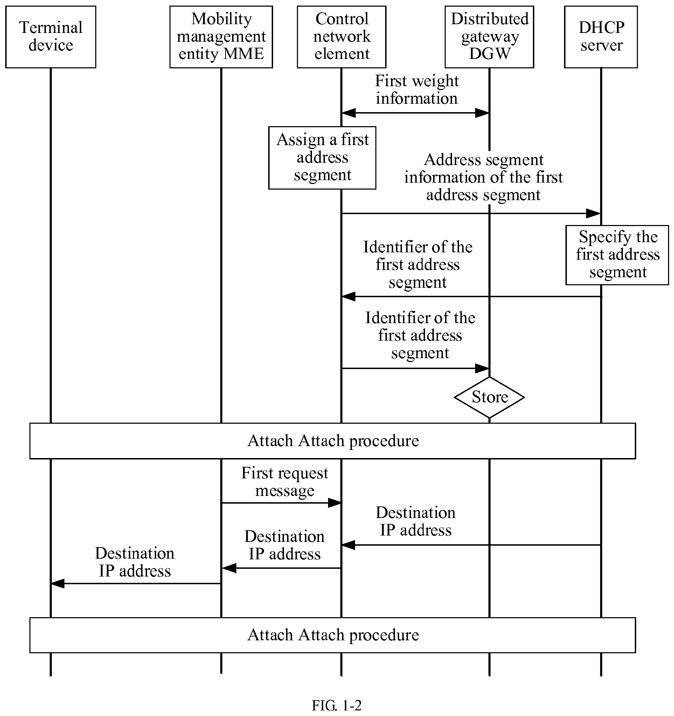

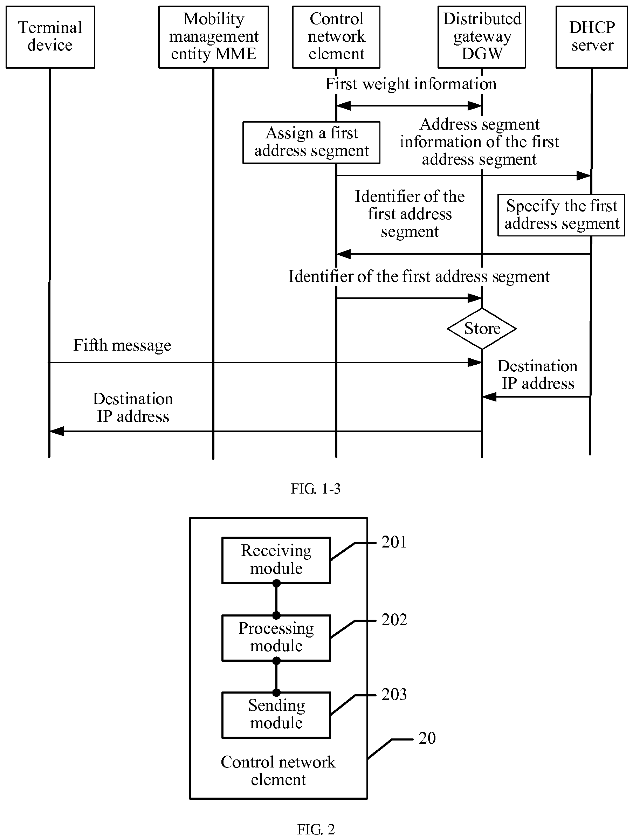

FIG. 1 is a schematic flowchart of an address assignment method according to an embodiment;
FIG. 1-1 is another schematic flowchart of an address assignment method according to an embodiment;
FIG. 1-2 is another schematic flowchart of an address assignment method according to an embodiment;
FIG. 1-3 is another schematic flowchart of an address assignment method according to an embodiment;
FIG. 2 is a schematic structural diagram of a control network element according to an embodiment;
FIG. 3 is a schematic structural diagram of a distributed gateway according to an embodiment;
FIG. 4 is a schematic structural diagram of a communications system according to an embodiment;
FIG. 5 is another schematic structural diagram of a control network element according to an embodiment; and
FIG. 6 is another schematic structural diagram of a distributed gateway according to an embodiment.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

In the specification, claims, and accompanying drawings of the present invention, the terms "first", "second", and so on are intended to distinguish between similar objects but do not necessarily indicate a specific order or sequence. It should be understood that the data used in such a way is interchangeable in proper circumstances, so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or modules is not necessarily limited to those expressly listed steps or modules, but may include other steps or modules not expressly listed or inherent to such a process, method, product, or device. The module division in this specification is merely logical division and may be other division in actual implementation. For example, a plurality of modules may be combined or integrated into another system, or some features may be ignored or not performed. In addition, the displayed or discussed mutual couplings or direct couplings or communication connections may be implemented by using some interfaces. The indirect couplings or communication connections between the modules may be implemented in electronic or other forms. This is not limited in this specification. In addition, the modules or submodules described as separate parts may or may not be physically separate, may or may not be physical modules, or may be distributed on a plurality of circuit modules. Some or all of the modules may be selected according to actual needs to achieve the objectives of the solutions of the embodiments in the present invention.

Embodiments of the present invention provide an address assignment method, a gateway, and a system, applied to the field of wireless communications technologies, so as to resolve a problem of relatively low resource utilization that is caused by improper address assignment in an existing mechanism.

Weight information in this specification refers to a quantity of resources required in a long period of time, and for example, may include current load, predicted load, or a user priority, or may be customized by a user.

In the existing mechanism, a mechanism for assigning an address segment to a DGW by a CGW is improper. To resolve this technical problem, the embodiments of the present invention mainly provide the following technical solution:
1. The CGW obtains weight information of a managed DGW.
2. The CGW assigns a corresponding address segment to the DGW according to the weight information of the DGW.

The CGW assigns the address segment according to the weight information of the DGW, so that an address resource can be properly assigned, and routing complexity in a network can be reduced.

Referring to FIG. 1, an address assignment method in an embodiment of the present invention is described below. This embodiment of the present invention includes the following steps.

101. A first distributed gateway DGW sends first weight information of the first DGW to a control network element.

The first weight information is used by the control network element to assign a corresponding first address segment to the first DGW according to the first weight information.

102. The control network element obtains the first weight information of the first DGW.

The control network element obtains the first weight information in mainly the following two cases:
a. after the first DGW is started up and enters a working state, when the first DGW performs basic interaction with the control network element, the first DGW sends the first weight information to the control network element; and
b. in an attach (Attach) procedure initiated by a terminal device, when the first DGW exchanges signaling with the control network element, the first DGW sends the first weight information to the control network element.

Optionally, the control network element may be a separate CGW, or may be a network element into which a CGW and an operation management (OM, Operation Management) entity are integrated, or may be a network element including two devices: a CGW and an OM entity that are independent of each other. A specific application scenario is not limited in this specification.

103. The control network element assigns a first address segment to the first DGW according to the first weight information.

104. The control network element sends address segment information of the first address segment to the first DGW.

105. The first DGW receives the address segment information of the first address segment that is returned by the control network element.

The address segment information of the first address segment includes an identifier of the first address segment. When the control network element includes a CGW and an OM entity, the first address segment is assigned by the OM entity to the first DGW according to the first weight information, the address segment information of the first address segment is sent by the OM entity to a Dynamic Host Configuration Protocol (DHCP, Dynamic Host Configuration Protocol) server, the identifier of the first address segment is obtained by the OM entity from the DHCP server, and the first weight information is obtained by the CGW from the first DGW.

Optionally, the identifier of the first address segment includes a proxy IP address of the DHCP server or a starting address of the first address segment. For example, in a scenario with a DHCP server, when the DHCP server provides an address assignment service to the outside, for a configured address segment, a proxy IP address is generally a starting address of the address segment. When receiving a DHCP request message sent by a terminal device, the DHCP server parses out a proxy IP address carried in the DHCP request message, to locate a corresponding address segment, selects an IP address from the address segment, encapsulates the IP address in a DHCP response message, and returns the DHCP response message to the terminal device that sends the DHCP request message.

In this embodiment of the present invention, the control network element assigns the first address segment to the first DGW according to the weight information of the first DGW, to implement proper address segment assignment, so that the DGW does not need to maintain a plurality of routing tables, thereby reducing routing complexity in a network, and improving address resource utilization.

Optionally, in some invention embodiments, after the control network element assigns the first address segment to the first DGW, in an attach procedure requested by a terminal device, the first DGW assigns an IP address to the terminal device, and details are as follows:
receiving, by the control network element, a first message sent by a mobility management entity (MME, Mobile Management Entity), where the first message is used to indicate that the terminal device requests to obtain an Internet Protocol IP address; and
obtaining, by the control network element, a destination IP address assigned by the first DGW to the terminal device, and returning, to the MME, a second message carrying the destination IP address.

Optionally, when the first DGW assigns an IP address to the terminal device, the first DGW needs to select the IP address from the first address segment assigned by the CGW to the first DGW. Because different quantities of terminal devices access the first DGW in different time periods, the first address segment has different assigned states. For example, at an early stage after the first DGW enters the working state, the first DGW has not assigned an address to a terminal device accessing the first DGW, or a relatively small quantity of terminal devices access the first DGW and remaining assignable address segments are relatively sufficient. Manners in which the first DGW assigns an IP address to a terminal device that newly accesses the first DGW mainly include the following two cases:
1. If it is the first time that the first DGW assigns an IP address to the terminal device after the first DGW is powered on, the control network element preferentially adds a starting address of the first address segment as the destination IP address to the second message, and returns the second message to the MME; and then the MME returns the destination IP address to UE. Optionally, an address randomly selected from the first address segment may be used as the destination IP address. A specific selection manner is not limited.
2. If it is not the first time that the first DGW assigns an IP address, the control network element sends a third message to the first DGW, where the third message is used to instruct the first DGW to assign the destination IP address to the terminal device; the first DGW returns, to the control network element, a fourth message carrying the destination IP address; after receiving the fourth message, the control network element returns, to the MME, the second message carrying the destination IP address; and then MME returns the destination IP address to UE. For a specific procedure, refer to FIG. 1-1.

Optionally, in some invention embodiments, in a scenario with a DHCP server, the control network element is responsible for assigning an address segment to the DGW, and the DHCP server provides only an IP address assignment function for the terminal device. An address resource pool of the DHCP server synchronously corresponds to an address resource pool of the control network element. For example, when there is a change in address segment assignment by the control network element, the change is synchronized to the DHCP server. To be specific, the control network element needs to control the DHCP server to assign an address segment to the DGW. Specifically, after assigning the first address segment to the first DGW, the control network element synchronizes address segment assignment information to the DHCP server, and synchronization signaling may be sent by the OM entity or the CGW. A process in which the control network element assigns the first address segment to the first DGW is as follows:
assigning, by the control network element, the first address segment to the first DGW according to the first weight information, and sending the address segment information of the first address segment to the Dynamic Host Configuration Protocol DHCP server, so that the DHCP server specifies the first address segment in the address resource pool according to the address segment information of the first address segment; and
obtaining, by the control network element, the identifier of the first address segment from the DHCP server, and sending the identifier of the first address segment to the first DGW

Optionally, when the control network element includes the CGW and the OM entity, a process in which the control network element assigns the first address segment to the first DGW is as follows:
obtaining, by the CGW in the control network element, the first weight information of the first DGW, and sending the first weight information to the OM entity in the control network element;
assigning, by the OM entity in the control network element, the first address segment to the first DGW in the DHCP server according to the first weight information, and sending the identifier of the first address segment that is obtained from the DHCP server to the CGW; and
sending, by the CGW in the control network element, the received identifier of the first address segment to the first DGW, so that after receiving a second request message sent by the terminal device, the first DGW obtains, from the DHCP server according to the identifier of the first address segment, the destination IP address assigned to the terminal device, and returns the destination IP address to the terminal device.

Optionally, after the first address segment is assigned to the first DGW, the first DGW assigns the IP address to the terminal device, and mainly assigns the IP address to the terminal device in an attach procedure requested by the terminal device or a DHCP procedure requested by the terminal device.

Specifically, there are mainly the following two cases in which the IP address is assigned to the terminal device:
1. The IP address is assigned to the terminal device in the attach procedure requested by the terminal device.
   Referring to FIG. 1-2, the control network element obtains the identifier of the first address segment from the DHCP server, and after receiving a first request message sent by the MME, obtains, from the DHCP server according to the identifier of the first address segment, the destination IP address assigned to the terminal device, and returns the destination IP address to the MME; and then the MME returns the destination IP address to the terminal device.
2. The IP address is assigned to the terminal device in the DHCP procedure requested by the terminal device that is successfully attached.

Referring to FIG. 1-3, the control network element obtains the identifier of the first address segment from the DHCP server, and sends the identifier of the first address segment to the first DGW, so that after receiving a fifth message sent by the terminal device, the first DGW obtains, from the DHCP server according to the identifier of the first address segment, the destination IP address assigned to the terminal device, and returns the destination IP address to the terminal device.

Optionally, in some invention embodiments, the CGW can implement dynamic address segment assignment and dynamic address segment management according to information such as a current load status of the DGW, mainly for the following two cases:
I. An address segment is scheduled for a plurality of DGWs that have accessed the CGW.
   The CGW manages a plurality of DGWs, and weight information of the DGWs may be different or there is a relatively large difference between weight information of the DGWs. Therefore, during initialization, address segments assigned by the CGW to the DGWs according to the weight information are different. However, as more terminal devices subsequently access some DGWs or address segments originally assigned to some DGWs become idle, in the present invention, the control network element may properly schedule the idle address segments according to an assignment status of the first address segment, to fully and properly use the idle address segments. Details are as follows:
   When determining that there is an idle address segment in the first address segment, the control network element performs at least one of the following:
   releasing the idle address segment; or
   assigning the idle address segment to a DGW that is managed by the control network element and that has an urgent address requirement; or
   re-assigning a new address segment to the first DGW according to address usage of the first DGW.
II. An address segment is scheduled for a plurality of DGWs that newly access the CGW.
   1. After a period of time, when a new DGW accesses the CGW, the CGW needs to assign an address segment to the DGW that newly accesses the CGW. However, because an address segment may have been assigned, according to weight information, to a DGW that previously accesses the CGW, a remaining address segment in the address resource pool is insufficient to be assigned to the DGW that newly accesses the CGW, and in this period of time, address segments of some DGWs are idle, that is, are not fully used. Therefore, the idle address segment may be assigned to the DGW that newly accesses the CGW. Details are as follows:
      obtaining, by the control network element, second weight information of a second DGW, and when determining that a remaining address segment resource in address segment resources is insufficient to assign an address segment corresponding to the second weight information, and there is the idle address segment in the first address segment, releasing the idle address segment in the first address segment, and assigning the idle address segment in the first address segment to the second DGW.
      In this optional invention embodiment, in both the foregoing two cases, the CGW can implement dynamic address management, so that an address assignment mechanism is more proper, and address resource utilization is improved.
   2. The control network element may determine, according to address usage of each managed DGW, whether to re-assign an address segment to the managed DGW or adjust address segments of some DGWs; or the control network element may re-assign, according to new weight information reported by a DGW, a new address segment to the DGW that provides the new weight information; or a DGW actively requests assignment of more address segments. In all the foregoing cases, dynamic address segment assignment can be implemented, load balancing uniformity can be improved, and resource utilization can be improved. The method further includes one of the following:
      a. periodically sending, by the first DGW, usage of the first address segment to the control network element, so that the control network element periodically obtains usage of address segments of all managed DGWs, and when determining that a preset update triggering condition is satisfied, re-assigns new address segments to some or all of the managed DGWs according to the usage of the address segments of all the managed DGWs. For example, when determining that there is the idle address segment in the first address segment, the control network element releases the idle address segment, or assigns the idle address segment to the DGW that is managed by the control network element and that has an urgent address requirement, or re-assigns the new address segment to the first DGW according to the address usage of the first DGW;
      b. obtaining, by the control network element, usage of address segments of all managed DGWs before a preset congestion time period is reached, and when determining that a preset update triggering condition is satisfied, re-assigning new address segments to some or all of the managed DGWs according to the usage of the address segments of all the managed DGWs;
      c. sending, by the first DGW, a sixth message to the control network element, so that after receiving the sixth message, the control network element assigns a new address segment to the first DGW according to the sixth message; or
      d. periodically counting, by the first DGW, a quantity of terminal devices accessing the first DGW, and when determining that the first address segment cannot meet a requirement of the terminal device, sending new weight information to the control network element, so that the control network element re-assigns a new address segment to the first DGW; and after obtaining the new weight information of the first DGW, re-assigning, by the control network element, the new address segment to the first DGW according to the new weight information.

Optionally, to avoid a problem that after the control network element is reset or recovered from a fault, an address segment before the fault cannot be recovered, each DGW needs to report usage of an address segment of the DGW to the CGW. That is, after the control network element is reset or recovered from the fault, the first DGW sends the usage of the first address segment to the control network element, and the control network element receives and stores the usage of the first address segment that is sent by the first DGW, so that the address segment before the resetting or recovery from the fault can be recovered.

The address assignment method in the present invention is described above, and a control network element and a distributed gateway that perform the address assignment method are described below by using examples.
I. Referring to FIG. 2, a control network element 20 is described. The control network element 20 includes:
   a receiving module 201, configured to obtain first weight information of a first distributed gateway DGW;
   a processing module 202, configured to assign a first address segment to the first DGW according to the first weight information received by the receiving module 201; and
   a sending module 203, configured to send address segment information of the first address segment to the first DGW. Optionally, the address segment information of the first address segment includes an identifier of the first address segment, and the identifier of the first address segment includes a proxy IP address of the DHCP server or a starting address of the first address segment.

In this embodiment of the present invention, the processing module 202 assigns the first address segment to the first DGW according to the weight information of the first DGW obtained by the receiving module 201, to implement proper address segment assignment, so that the DGW does not need to maintain a plurality of routing tables, thereby reducing routing complexity in a network, and improving address resource utilization.

Optionally, in some invention embodiments, the receiving module 201 is further configured to: receive a first message sent by a mobility management entity MME, where the first message is used to indicate that a terminal device requests to obtain an Internet Protocol IP address; and obtain a destination IP address assigned by the first DGW to the terminal device; and
the sending module 203 is further configured to return, to the MME, a second message carrying the destination IP address obtained by the receiving module 201.

Optionally, in some invention embodiments, the processing module 202 is further configured to perform one of the following:
if it is the first time that the first DGW assigns an IP address to the terminal device after the first DGW is powered on, adding a starting address of the first address segment as the destination IP address to the second message, and returning the second message to the MME by using the sending module 203; or
if it is not the first time that the first DGW assigns an IP address, sending a third message to the first DGW by using the sending module 203, where the third message is used to instruct the first DGW to assign the destination IP address to the terminal device; and after receiving, by using the receiving module 201, a fourth message that is returned by the first DGW and that carries the destination IP address, returning, to the MME by using the sending module 203, the second message carrying the destination IP address.

Optionally, in some invention embodiments, the sending module 203 is further configured to:
send the address segment information of the first address segment to a Dynamic Host Configuration Protocol DHCP server, so that the DHCP server specifies the first address segment in an address resource pool according to the address segment information of the first address segment.

Optionally, in some invention embodiments, the processing module 202 is further configured to perform one of the following steps:
obtaining the identifier of the first address segment from the DHCP server by using the receiving module 201, and after receiving, by using the receiving module 201, a first request message sent by the MME, obtaining, from the DHCP server according to the identifier of the first address segment, the destination IP address assigned to the terminal device, and returning the destination IP address to the MME by using the sending module 203; or
obtaining the identifier of the first address segment from the DHCP server by using the receiving module 201, and sending the identifier of the first address segment to the first DGW by using the sending module 203, so that after receiving a fifth message sent by the terminal device, the first DGW obtains, from the DHCP server according to the identifier of the first address segment, the destination IP address assigned to the terminal device, and returns the destination IP address to the terminal device.

Optionally, in some invention embodiments, when determining that there is an idle address segment in the first address segment, the processing module 202 is further configured to perform at least one of the following:
releasing the idle address segment; or
assigning the idle address segment to a DGW that is managed by the control network element and that has an urgent address requirement; or
re-assigning a new address segment to the first DGW according to address usage of the first DGW.

Optionally, in some invention embodiments, the processing module 202 is further configured to:
obtain, by using the receiving module 201, second weight information of a second DGW, and when determining that a remaining address segment resource in address segment resources is insufficient to assign an address segment corresponding to the second weight information, and there is the idle address segment in the first address segment, release the idle address segment in the first address segment, and assign the idle address segment in the first address segment to the second DGW.

Optionally, in some invention embodiments, the processing module 202 is further configured to perform one of the following steps:
periodically obtaining, by using the receiving module 201, usage of address segments of all managed DGWs, and when determining that a preset update triggering condition is satisfied, re-assigning new address segments to some or all of the managed DGWs according to the usage of the address segments of all the managed DGWs;
obtaining, by using the receiving module 201, usage of address segments of all managed DGWs before a preset congestion time period is reached, and when determining that a preset update triggering condition is satisfied, re-assigning new address segments to some or all of the managed DGWs according to the usage of the address segments of all the managed DGWs;
receiving, by using the receiving module 201, a sixth message sent by the first DGW, and assigning a new address segment to the first DGW according to the sixth message;
obtaining, by using the receiving module 201, new weight information of the first DGW, and re-assigning a new address segment to the first DGW according to the new weight information; or
after the control network element is reset or recovered from a fault, receiving and storing, by using the receiving module 201, usage of the first address segment that is sent by the first DGW.

II. A first distributed gateway 30 is described. The first distributed gateway 30 includes:
a sending module 301, configured to send first weight information of the first distributed gateway DGW to a control network element, so that the control network element assigns a corresponding first address segment to the first DGW according to the first weight information; and
a receiving module 302, configured to receive address segment information of the first address segment that is returned by the control network element. Optionally, the address segment information of the first address segment includes an identifier of the first address segment, and the identifier of the first address segment includes a proxy IP address of the DHCP server or a starting address of the first address segment.

In this embodiment of the present invention, the sending module 301 sends the first weight information of the first DGW to the control network element, so that the control network element assigns the corresponding first address segment to the first DGW according to the first weight information, to implement proper address segment assignment, so that the DGW does not need to maintain a plurality of routing tables, thereby reducing routing complexity in a network, and improving address resource utilization.

Optionally, in some invention embodiments, the first distributed gateway 30 further includes:
a processing module 303, configured to: receive, by using the receiving module 302, a third message sent by the control network element, assign a destination IP address to a terminal device according to the third message, and send, to the control network element by using the sending module 301, a fourth message carrying the destination IP address, so that the control network element adds the destination IP address to a second message and returns the second message to a mobility management entity MME.

Optionally, in some invention embodiments, the processing module 303 is further configured to:
after receiving, by using the receiving module 302, a fifth message sent by the terminal device, obtain, from the DHCP server according to the identifier of the first address segment, the destination IP address assigned to the terminal device, and return the destination IP address to the terminal device by using the sending module 301.

Optionally, in some invention embodiments, the processing module 303 is further configured to perform one of the following:
periodically sending usage of the first address segment to the control network element by using the sending module 301, so that when determining that there is an idle address segment in the first address segment, the control network element releases the idle address segment, or assigns the idle address segment to a DGW that is managed by the control network element and that has an urgent address requirement, or re-assigns a new address segment to the first DGW according to address usage of the first DGW;
sending, by using the sending module 301, a sixth message to the control network element, where the sixth message is used to request the control network element to assign a new address segment to the first DGW;
after the control network element is reset or recovered from a fault, sending usage of the first address segment to the control network element by using the sending module 301; or
periodically counting a quantity of terminal devices accessing the first DGW, and when determining that the first address segment cannot meet a requirement of the terminal device, sending new weight information to the control network element by using the sending module 301, so that the control network element re-assigns a new address segment to the first DGW.

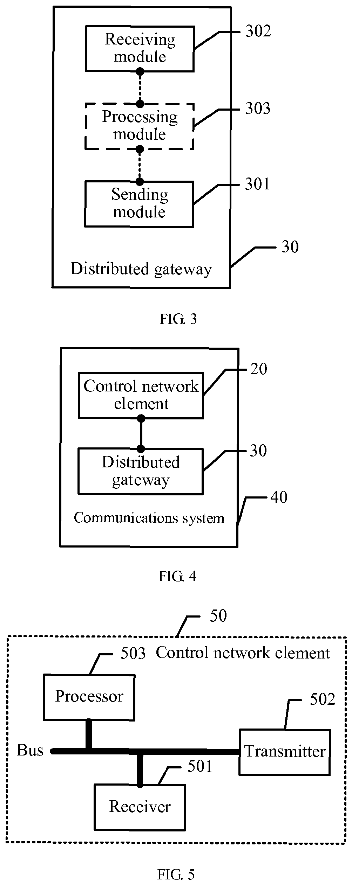

In the embodiments of the present invention, all physical devices corresponding to the receiving modules in FIG. 2 and FIG. 3 are receivers, all physical devices corresponding to the sending modules in FIG. 2 and FIG. 3 are transmitters, and all physical devices corresponding to the processing modules in FIG. 2 and FIG. 3 are processors.

III. A communications system 40 in the present invention is described. The communications system 40 includes:
the control network element shown in FIG. 2 and the distributed gateway shown in FIG. 3.

The present invention further provides a computer storage medium. The medium stores a program, and when the program is executed, some or all of the steps of the foregoing address assignment method performed by the foregoing control network element or the foregoing distributed gateway are included.

FIG. 5 is another schematic structural diagram of a control network element 50 according to an embodiment of the present invention. The control network element 50 may include at least one network interface or another communications interface, at least one receiver 501, at least one transmitter 502, at least one processor 503, and a memory 504, to implement connection and communication between these apparatuses. Communication connections between a system gateway and at least one other network element are implemented by using the at least one network interface (which may be a wired network interface or a wireless network interface). The Internet, a wide area network, a local area network, a metropolitan area network, or the like may be used.

The memory 504 may include a read-only memory and a random access memory, and provide an instruction and data to the processor 503. A part of the memory 504 may further include a high-speed random access memory (RAM, Random Access Memory), or may further include a non-volatile memory (non-volatile memory).

The memory 504 stores the following elements, executable modules or data structures, or a subset thereof, or an extension set thereof:
operation instructions, including various operation instructions and used to perform various operations; and
an operating system, including various system programs and used to implement various basic services and process a hardware-based task.

In this embodiment of the present invention, the processor 503 performs the following operations by invoking the operation instructions (the operation instructions may be stored in the operating system) stored in the memory 504:
obtaining first weight information of a first distributed gateway DGW by using the receiver 501;
assigning a first address segment to the first DGW according to the first weight information received by the receiver 501; and
sending address segment information of the first address segment to the first DGW by using the transmitter 502.

In some implementations, the processor 503 may further perform the following steps:
receiving, by using the receiver 501, a first message sent by a mobility management entity MME, where the first message is used to indicate that a terminal device requests to obtain an Internet Protocol IP address; and obtaining a destination IP address assigned by the first DGW to the terminal device; and
returning, to the MME by using the transmitter 502, a second message carrying the destination IP address obtained by the receiver 501.

In some implementations, the processor 503 may further perform one of the following steps:
if it is the first time that the first DGW assigns an IP address to the terminal device after the first DGW is powered on, adding a starting address of the first address segment as the destination IP address to the second message, and returning the second message to the MME by using the transmitter 502; or
if it is not the first time that the first DGW assigns an IP address, sending a third message to the first DGW by using the transmitter 502, where the third message is used to instruct the first DGW to assign the destination IP address to the terminal device; and after receiving, by using the receiver 501, a fourth message that is returned by the first DGW and that carries the destination IP address, returning, to the MME by using the transmitter 502, the second message carrying the destination IP address.

In some implementations, the processor 503 may further perform the following step:
sending, by using the transmitter 502, the address segment information of the first address segment to a Dynamic Host Configuration Protocol DHCP server, so that the DHCP server specifies the first address segment in an address resource pool according to the address segment information of the first address segment.

In some implementations, the processor 503 may further perform at least one of the following steps:
obtaining an identifier of the first address segment from the DHCP server by using the receiver 501, and after receiving, by using the receiver 501, a first request message sent by the MME, obtaining, from the DHCP server according to the identifier of the first address segment, the destination IP address assigned to the terminal device, and returning the destination IP address to the MME by using the transmitter 502; or
obtaining an identifier of the first address segment from the DHCP server by using the receiver 501, and sending the identifier of the first address segment to the first DGW by using the transmitter 502, so that after receiving a fifth message sent by the terminal device, the first DGW obtains, from the DHCP server according to the identifier of the first address segment, the destination IP address assigned to the terminal device, and returns the destination IP address to the terminal device.

In some implementations, when determining that there is an idle address segment in the first address segment, the processor 503 may further perform at least one of the following steps:
releasing the idle address segment; or
assigning the idle address segment to a DGW that is managed by the control network element and that has an urgent address requirement; or
re-assigning a new address segment to the first DGW according to address usage of the first DGW.

In some implementations, the processor 503 may further perform the following step:
obtaining, by using the receiver 501, second weight information of a second DGW, and when determining that a remaining address segment resource in address segment resources is insufficient to assign an address segment corresponding to the second weight information, and there is the idle address segment in the first address segment, releasing the idle address segment in the first address segment, and assigning the idle address segment in the first address segment to the second DGW.

In some implementations, the processor 503 may further perform at least one of the following steps:
periodically obtaining, by using the receiver 501, usage of address segments of all managed DGWs, and when determining that a preset update triggering condition is satisfied, re-assigning new address segments to some or all of the managed DGWs according to the usage of the address segments of all the managed DGWs;
obtaining, by using the receiver 501, usage of address segments of all managed DGWs before a preset congestion time period is reached, and when determining that a preset update triggering condition is satisfied, re-assigning new address segments to some or all of the managed DGWs according to the usage of the address segments of all the managed DGWs;
receiving, by using the receiver 501, a sixth message sent by the first DGW, and assigning a new address segment to the first DGW according to the sixth message;
obtaining, by using the receiver 501, new weight information of the first DGW, and re-assigning a new address segment to the first DGW according to the new weight information; or
after the control network element is reset or recovered from a fault, receiving and storing, by using the receiver 501, usage of the first address segment that is sent by the first DGW.

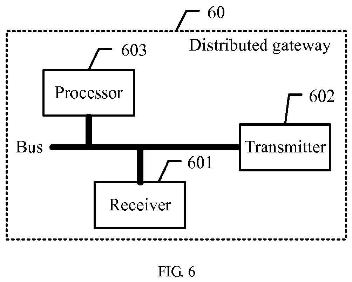

FIG. 6 is another schematic structural diagram of a distributed gateway 60 according to an embodiment of the present invention. The distributed gateway 60 may include at least one network interface or another communications interface, at least one receiver 601, at least one transmitter 602, at least one processor 603, and a memory 604, to implement connection and communication between these apparatuses. Communication connections between the system gateway and at least one other network element are implemented by using the at least one network interface (which may be a wired network interface or a wireless network interface). The Internet, a wide area network, a local area network, a metropolitan area network, or the like may be used.

The memory 604 may include a read-only memory and a random access memory, and provide an instruction and data to the processor 603. A part of the memory 604 may further include a high-speed random access memory (RAM, Random Access Memory), or may further include a non-volatile memory (non-volatile memory).

The memory 604 stores the following elements, executable modules or data structures, or a subset thereof, or an extension set thereof:
operation instructions, including various operation instructions and used to perform various operations; and
an operating system, including various system programs and used to implement various basic services and process a hardware-based task.

In this embodiment of the present invention, the processor 603 performs the following operations by invoking the operation instructions (the operation instructions may be stored in the operating system) stored in the memory 604:
sending first weight information of the first distributed gateway DGW to a control network element by using the transmitter 602, so that the control network element assigns a corresponding first address segment to the first DGW according to the first weight information; and
receiving, by using the receiver 601, address segment information of the first address segment that is returned by the control network element. Optionally, the address segment information of the first address segment includes an identifier of the first address segment, and the identifier of the first address segment includes a proxy IP address of the DHCP server or a starting address of the first address segment.

In some implementations, the processor 603 may further perform the following step:
receiving, by using the receiver 601, a third message sent by the control network element, assigning a destination IP address to a terminal device according to the third message, and sending, to the control network element by using the receiver 601, a fourth message carrying the destination IP address, so that the control network element adds the destination IP address to a second message and returns the second message to a mobility management entity MME.

In some implementations, the processor 603 may further perform the following step:
after receiving, by using the receiver 601, a fifth message sent by the terminal device, obtaining, from the DHCP server according to the identifier of the first address segment, the destination IP address assigned to the terminal device, and returning the destination IP address to the terminal device by using the receiver 601.

In some implementations, the processor 603 may further perform one of the following steps:
periodically sending usage of the first address segment to the control network element by using the transmitter 602, so that when determining that there is an idle address segment in the first address segment, the control network element releases the idle address segment, or assigns the idle address segment to a DGW that is managed by the control network element and that has an urgent address requirement, or re-assigns a new address segment to the first DGW according to address usage of the first DGW;
sending a sixth message to the control network element by using the transmitter 602, where the sixth message is used to request the control network element to assign a new address segment to the first DGW;
after the control network element is reset or recovered from a fault, sending usage of the first address segment to the control network element by using the transmitter 602; or
periodically counting a quantity of terminal devices accessing the first DGW, and when determining that the first address segment cannot meet a requirement of the terminal device, sending new weight information to the control network element by using the transmitter 602, so that the control network element re-assigns a new address segment to the first DGW.

In the foregoing embodiments, the description of each embodiment has respective focus. For a part that is not described in detail in an embodiment, refer to related descriptions in other embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. Indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The address assignment method and the gateway provided in the present invention are described in detail above. In this specification, specific examples are used to describe the principle and implementations of the present invention, and the description of the embodiments is only intended to help understand the method and core idea of the present invention. Meanwhile, a person of ordinary skill in the art may, based on the idea of the present invention, make modifications with respect to the specific implementations and the application scope. Therefore, the content of this specification shall not be construed as a limitation to the present invention as defined by the appended claims.

## Claims

1. An Internet Protocol, IP, address assignment method, wherein the method comprises:
obtaining (102), by a control network element, first weight information of a first distributed gateway, DGW, and assigning (103) a first address segment to the first DGW according to the first weight information; and
sending (104), by the control network element, address segment information of the first address segment to the first DGW;
obtaining, by the control network element, a second weight information of a second DGW, and when determining that a remaining address segment resource in address segment resources is insufficient to assign an address segment corresponding to the second weight information, and there is an idle address segment in the first address segment, releasing the idle address segment in the first address segment, and assigning the idle address segment in the first address segment to the second DGW;wherein the weight information includes a quantity of resources.

2. The method according to claim 1, wherein the method further comprises:
receiving, by the control network element, a first message sent by a mobility management entity, MME, wherein the first message is used to indicate that a terminal device requests to obtain an Internet Protocol IP address; and
obtaining, by the control network element, a destination IP address assigned by the first DGW to the terminal device, and returning, to the MME, a second message carrying the destination IP address.

3. The method according to claim 2, wherein the obtaining, by the control network element, a destination IP address assigned by the first DGW to the terminal device, and returning, to the MME, a second message carrying the destination IP address comprises:
sending, by the control network element, a third message to the first DGW, wherein the third message is used to instruct the first DGW to assign the destination IP address to the terminal device; and after receiving a fourth message that is returned by the first DGW and that carries the destination IP address, returning, by the control network element to the MME, the second message carrying the destination IP address.

4. The method according to claim 1, wherein the address segment information of the first address segment comprises an identifier of the first address segment; and after the assigning a first address segment to the first DGW according to the first weight information, the method further comprises:
sending, by the control network element, the address segment information of the first address segment to a Dynamic Host Configuration Protocol, DHCP, server, so that the DHCP server specifies the first address segment in an address resource pool according to the address segment information of the first address segment.

5. The method according to claim 4, wherein the method further comprises one of the following:
obtaining, by the control network element, the identifier of the first address segment from the DHCP server, and after receiving a first request message sent by the MME, obtaining, from the DHCP server according to the identifier of the first address segment, the destination IP address assigned to the terminal device, and returning the destination IP address to the MME; or
obtaining, by the control network element, the identifier of the first address segment from the DHCP server, and sending the identifier of the first address segment to the first DGW, so that after receiving a fifth message sent by the terminal device, the first DGW obtains, from the DHCP server according to the identifier of the first address segment, the destination IP address assigned to the terminal device, and returns the destination IP address to the terminal device.

6. An Internet Protocol, IP, address control network element, wherein the control network element comprises:
a receiving module (201), configured to obtain first weight information of a first distributed gateway, DGW;
a processing module (202), configured to assign a first address segment to the first DGW according to the first weight information received by the receiving module; and
a sending module (203), configured to send address segment information of the first address segment to the first DGW;
the receiving module (201), configured to further obtain a second weight information of a second DGW;
the processing module (202), configured to release an idle address segment in the first address segment, and assign the idle address segment in the first address segment to the second DGW when it is determined that a remaining address segment resource in address segment resources is insufficient to assign an address segment corresponding to the second weight information, and there is the idle address segment in the first address segment;
wherein the weight information includes a quantity of resources.

7. The control network element according to claim 6, wherein the receiving module is further configured to: receive a first message sent by a mobility management entity, MME, wherein the first message is used to indicate that a terminal device requests to obtain an Internet Protocol IP address; and obtain a destination IP address assigned by the first DGW to the terminal device; and
the sending module is further configured to return, to the MME, a second message carrying the destination IP address obtained by the receiving module.

8. The control network element according to claim 7, wherein the processing module is further configured to:
send a third message to the first DGW by using the sending module, wherein the third message is used to instruct the first DGW to assign the destination IP address to the terminal device; and after receiving, by using the receiving module, a fourth message that is returned by the first DGW and that carries the destination IP address, returning, to the MME by using the sending module, the second message carrying the destination IP address.

9. The control network element according to claim 6, wherein the address segment information of the first address segment comprises an identifier of the first address segment, and the sending module is further configured to:
send the address segment information of the first address segment to a Dynamic Host Configuration Protocol, DHCP, server, so that the DHCP server specifies the first address segment in an address resource pool according to the address segment information of the first address segment.

10. The control network element according to claim 9, wherein the processing module is further configured to perform one of the following steps:
obtaining the identifier of the first address segment from the DHCP server by using the receiving module, and after receiving, by using the receiving module, a first request message sent by the MME, obtaining, from the DHCP server according to the identifier of the first address segment, the destination IP address assigned to the terminal device, and returning the destination IP address to the MME by using the sending module; or
obtaining the identifier of the first address segment from the DHCP server by using the receiving module, and sending the identifier of the first address segment to the first DGW by using the sending module, so that after receiving a fifth message sent by the terminal device, the first DGW obtains, from the DHCP server according to the identifier of the first address segment, the destination IP address assigned to the terminal device, and returns the destination IP address to the terminal device.

## Patentansprüche

1. Internet-Protokoll-, IP, -Adressenzuweisungsverfahren, wobei das Verfahren umfasst:
Erhalten (102), durch ein Steuernetzwerkelement, von ersten Gewichtsinformationen eines ersten verteilten Gateways, DGW, und Zuweisen (103) eines ersten Adressensegments an das erste DGW gemäß den ersten Gewichtsinformationen; und
Senden (104), durch das Steuernetzwerkelement, von Adressensegmentinformationen des ersten Adressensegments an das erste DGW;
Erhalten, durch das Steuernetzwerkelement, von zweiten Gewichtsinformationen eines zweiten DGW, und wenn bestimmt wird, dass eine verbleibende Adressensegmentressource in Adressensegmentressourcen nicht dazu ausreicht, ein Adressensegment zuzuweisen, das den zweiten Gewichtsinformationen entspricht, und es ein ungenutztes Adressensegment im ersten Adressensegment gibt, Freigeben des ungenutzten Adressensegments im ersten Adressensegment und Zuweisen des ungenutzten Adressensegments im ersten Adressensegment an das zweite DGW;
wobei die Gewichtsinformationen eine Menge von Ressourcen beinhalten.

2. Verfahren nach Anspruch 1, wobei das Verfahren ferner umfasst:
Empfangen, durch das Steuernetzwerkelement, einer ersten Nachricht, die von einer Mobility Management Entity, MME, gesendet wird, wobei die erste Nachricht zu der Angabe verwendet wird, dass ein Endgerät anfordert, eine Internet-Protokoll-, IP, - Adresse zu erhalten; und
Erhalten, durch das Steuernetzwerkelement, einer Ziel-IP-Adresse, die dem Endgerät vom ersten DGW zugewiesen ist, und Zurücksenden einer zweiten Nachricht, die die Ziel-IP-Adresse trägt, an die MME

3. Verfahren nach Anspruch 2, wobei das Erhalten, durch das Steuernetzwerkelement, einer Ziel-IP-Adresse, die dem Endgerät vom ersten DGW zugewiesen ist, und das Zurücksenden einer zweiten Nachricht, die die Ziel-IP-Adresse trägt, an die MME umfasst:
Senden, durch das Steuernetzwerkelement, einer dritten Nachricht an das erste DGW,
wobei die dritte Nachricht dazu verwendet wird, das erste DGW anzuweisen, dem Endgerät die Ziel-IP-Adresse zuzuweisen; und nach dem Empfangen einer vierten Nachricht, die vom ersten DGW zurückgesendet wird und die Ziel-IP-Adresse trägt, Zurücksenden, durch das Steuernetzwerkelement, der zweiten Nachricht, die die Ziel-IP-Adresse trägt, an die MME

4. Verfahren nach Anspruch 1, wobei die Adressensegmentinformationen des ersten Adressensegments einen Bezeichner des ersten Adressensegments umfassen; und das Verfahren nach dem Zuweisen eines ersten Adressensegments an das erste DGW gemäß den ersten Gewichtsinformationen ferner umfasst:
Senden, durch das Steuernetzwerkelement, der Adressensegmentinformationen des ersten Adressensegments an einen "Dynamic Host Configuration Protocol"-, DHCP, - Server, damit der DHCP-Server das erste Adressensegment in einem Adressressourcen-Pool entsprechend den Adressensegmentinformationen des ersten Adressensegments spezifiziert.

5. Verfahren nach Anspruch 4, wobei das Verfahren ferner einen der folgenden Vorgänge umfasst:
Erhalten, durch das Steuernetzwerkelement, des Bezeichners des ersten Adressensegments vom DHCP-Server, und nach dem Empfangen einer ersten von der MME gesendeten Anforderungsnachricht, Erhalten, vom DHCP-Server gemäß dem Bezeichner des ersten Adressensegments, der dem Endgerät zugewiesenen Ziel-IP-Adresse, und Zurücksenden der Ziel-IP-Adresse an die MME; oder
Erhalten, durch das Steuernetzwerkelement, des Bezeichners des ersten Adressensegments vom DHCP-Server, und Senden des Bezeichners des ersten Adressensegments an das erste DGW, so dass nach dem Empfangen einer vom Endgerät gesendeten fünften Nachricht das erste DGW vom DHCP-Server gemäß dem Bezeichner des ersten Adressensegments die dem Endgerät zugewiesene Ziel-IP-Adresse erhält und die Ziel-IP-Adresse an das Endgerät zurücksendet.

6. Internet-Protokoll-, IP, -Adressen-Steuernetzwerkelement, wobei das Steuernetzwerkelement umfasst:
ein Empfangsmodul (201), das dafür ausgelegt ist, erste Gewichtsinformationen eines ersten verteilten Gateways, DGW, zu erhalten;
ein Verarbeitungsmodul (202), das dafür ausgelegt ist, dem ersten DGW ein erstes Adressensegment gemäß den ersten Gewichtsinformationen, die vom Empfangsmodul empfangen werden, zuzuweisen; und
ein Sendemodul (203), das dafür ausgelegt ist, Adressensegmentinformationen des ersten Adressensegments an das erste DGW zu senden;
wobei das Empfangsmodul (201) dafür ausgelegt ist, ferner zweite Gewichtsinformationen einer zweiten DGW zu erhalten;
das Verarbeitungsmodul (202) dafür ausgelegt ist, ein ungenutztes Adressensegment im ersten Adressensegment freizugeben und das ungenutzte Adressensegment im ersten Adressensegment dem zweiten DGW zuzuweisen, wenn bestimmt wird, dass eine verbleibende Adressensegmentressource in Adressensegmentressourcen nicht dazu ausreicht, ein Adressensegment zuzuweisen, das den zweiten Gewichtsinformationen entspricht, und dass das ungenutzte Adressensegment im ersten Adressensegment vorhanden ist;
wobei die Gewichtsinformationen eine Menge von Ressourcen beinhalten.

7. Steuernetzwerkelement nach Anspruch 6, wobei das Empfangsmodul ferner für Folgendes ausgelegt ist: Empfangen einer ersten Nachricht, die von einer Mobility Management Entity, MME, gesendet wird, wobei die erste Nachricht zu der Angabe verwendet wird, dass ein Endgerät anfordert, eine Internet-Protokoll-, IP, -Adresse zu erhalten; und Erhalten einer Ziel-IP-Adresse, die dem Endgerät vom ersten DGW zugewiesen wird; und
das Sendemodul ferner dafür ausgelegt ist, eine zweite Nachricht, die die vom Empfangsmodul erhaltene Ziel-IP-Adresse trägt, an die MME zurückzusenden.

8. Steuernetzwerkelement nach Anspruch 7, wobei das Verarbeitungsmodul ferner für Folgendes ausgelegt ist:
Senden einer dritten Nachricht an das erste DGW unter Verwendung des Sendemoduls,
wobei die dritte Nachricht dazu verwendet wird, das erste DGW anzuweisen, dem Endgerät die Ziel-IP-Adresse zuzuweisen; und nach dem Empfangen, unter Verwendung des Empfangsmoduls, einer vierten Nachricht, die vom ersten DGW zurückgesendet wird und die Ziel-IP-Adresse trägt, Zurücksenden, unter Verwendung des Sendemoduls, der zweiten Nachricht, die die Ziel-IP-Adresse trägt, an die MME

9. Steuernetzwerkelement nach Anspruch 6, wobei die Adressensegmentinformationen des ersten Adressensegments einen Bezeichner des ersten Adressensegments umfassen und das Sendemodul ferner für Folgendes ausgelegt ist:
Senden der Adressensegmentinformationen des ersten Adressensegments an einen "Dynamic Host Configuration Protocol"-, DHCP, -Server, damit der DHCP-Server das erste Adressensegment in einem Adressressourcen-Pool entsprechend den Adressensegmentinformationen des ersten Adressensegments spezifiziert.

10. Steuernetzwerkelement nach Anspruch 9, wobei das Verarbeitungsmodul ferner dafür ausgelegt ist, einen der folgenden Schritte durchzuführen:
Erhalten des Bezeichners des ersten Adressensegments vom DHCP-Server unter Verwendung des Empfangsmoduls, und nach dem Empfangen, unter Verwendung des Empfangsmoduls, einer von der MME gesendeten ersten Anforderungsnachricht, Erhalten, vom DHCP-Server gemäß dem Bezeichner des ersten Adressensegments, der Ziel-IP-Adresse, die dem Endgerät zugewiesen ist, und Zurücksenden der Ziel-IP-Adresse an die MME unter Verwendung des Sendemoduls; oder
Erhalten des Bezeichners des ersten Adressensegments vom DHCP-Server unter Verwendung des Empfangsmoduls, und Senden des Bezeichners des ersten Adressensegments an das erste DGW unter Verwendung des Sendemoduls, so dass nach dem Empfangen einer vom Endgerät gesendeten fünften Nachricht das erste DGW vom DHCP-Server gemäß dem Bezeichner des ersten Adressensegments die Ziel-IP-Adresse erhält, die dem Endgerät zugewiesen ist, und die Ziel-IP-Adresse an das Endgerät zurücksendet.

## Revendications

1. Procédé d'attribution d'adresse de protocole Internet, IP, le procédé comprenant :
l'obtention (102), par un élément de réseau de commande, de premières informations de pondération d'une première passerelle distribuée, DGW, et l'attribution (103) d'un premier segment d'adresse à la première DGW en fonction des premières informations de pondération; et
l'envoi (104), par l'élément de réseau de commande, d'informations de segment d'adresse du premier segment d'adresse à la première DGW ;
l'obtention, par l'élément de réseau de commande, de secondes informations de pondération d'une seconde DGW, et lorsqu'il est déterminé qu'une ressource de segment d'adresse restante dans des ressources de segment d'adresse est insuffisante pour attribuer un segment d'adresse correspondant aux secondes informations de pondération, et qu'il y a un segment d'adresse inactif dans le premier segment d'adresse, la libération du segment d'adresse inactif dans le premier segment d'adresse, et l'attribution du segment d'adresse inactif dans le premier segment d'adresse à la seconde DGW ; les informations de pondération comprenant une quantité de ressources.

2. Procédé selon la revendication 1, le procédé comprenant en outre :
la réception, par l'élément de réseau de commande, d'un premier message envoyé par une entité de gestion de mobilité, MME, le premier message étant utilisé pour indiquer qu'un dispositif terminal demande à obtenir une adresse de protocole Internet IP ; et
l'obtention, par l'élément de réseau de commande, d'une adresse IP de destination attribuée par la première DGW au dispositif terminal, et le renvoi, à la MME, d'un deuxième message transportant l'adresse IP de destination.

3. Procédé selon la revendication 2, l'obtention, par l'élément de réseau de commande, d'une adresse IP de destination attribuée par la première DGW au dispositif terminal, et le renvoi, à la MME, d'un deuxième message transportant l'adresse IP de destination comprenant :
l'envoi, par l'élément de réseau de commande, d'un troisième message à la première DGW, le troisième message étant utilisé pour ordonner à la première DGW d'attribuer l'adresse IP de destination au dispositif terminal ; et après la réception d'un quatrième message qui est renvoyé par la première DGW et qui transporte l'adresse IP de destination, le renvoi, par l'élément de réseau de commande à la MME, du deuxième message transportant l'adresse IP de destination.

4. Procédé selon la revendication 1, les informations de segment d'adresse du premier segment d'adresse comprenant un identifiant du premier segment d'adresse ; et après l'attribution d'un premier segment d'adresse à la première DGW en fonction des premières informations de pondération, le procédé comprenant en outre :
l'envoi, par l'élément de réseau de commande, des informations de segment d'adresse du premier segment d'adresse à un serveur de protocole de configuration hôte dynamique, DHCP, de sorte que le serveur DHCP spécifie le premier segment d'adresse dans un groupe de ressources d'adresse en fonction des informations de segment d'adresse du premier segment d'adresse.

5. Procédé selon la revendication 4, le procédé comprenant en outre l'un des éléments suivants :
l'obtention, par l'élément de réseau de commande, de l'identifiant du premier segment d'adresse à partir du serveur DHCP, et après la réception d'un premier message de demande envoyé par la MME, l'obtention, à partir du serveur DHCP en fonction de l'identifiant du premier segment d'adresse, de l'adresse IP de destination attribuée au dispositif terminal, et le renvoi de l'adresse IP de destination à la MME ; ou
l'obtention, par l'élément de réseau de commande, de l'identifiant du premier segment d'adresse à partir du serveur DHCP, et l'envoi de l'identifiant du premier segment d'adresse à la première DGW, de sorte qu'après la réception d'un cinquième message envoyé par le dispositif terminal, la première DGW obtient, à partir du serveur DHCP en fonction de l'identifiant du premier segment d'adresse, l'adresse IP de destination attribuée au dispositif terminal, et renvoie l'adresse IP de destination au dispositif terminal.

6. Élément de réseau de commande d'adresse de protocole Internet IP, l'élément de réseau de commande comprenant :
un module de réception (201), configuré pour obtenir des premières informations de pondération d'une première passerelle distribuée, DGW ;
un module de traitement (202), configuré pour attribuer un premier segment d'adresse à la première DGW en fonction des premières informations de pondération reçues par le module de réception ; et
un module d'envoi (203), configuré pour envoyer des informations de segment d'adresse du premier segment d'adresse à la première DGW ;
le module de réception (201), configuré pour obtenir en outre des secondes informations de pondération d'une seconde DGW ;
le module de traitement (202), configuré pour libérer un segment d'adresse inactif dans le premier segment d'adresse, et pour attribuer le segment d'adresse inactif dans le premier segment d'adresse à la seconde DGW lorsqu'il est déterminé qu'une ressource de segment d'adresse restante dans des ressources de segment d'adresse est insuffisante pour attribuer un segment d'adresse correspondant aux secondes informations de pondération, et qu'il y a le segment d'adresse inactif dans le premier segment d'adresse ;
les informations de pondération comprenant une quantité de ressources.

7. Élément de réseau de commande selon la revendication 6, le module de réception étant en outre configuré pour : recevoir un premier message envoyé par une entité de gestion de mobilité, MME, le premier message étant utilisé pour indiquer qu'un dispositif terminal demande à obtenir une adresse de protocole Internet IP ; et obtenir une adresse IP de destination attribuée par la première DGW au dispositif terminal ; et
le module d'envoi étant en outre configuré pour renvoyer à la MME un deuxième message transportant l'adresse IP de destination obtenue par le module de réception.

8. Élément de réseau de commande selon la revendication 7, le module de traitement étant en outre configuré pour :
envoyer un troisième message à la première DGW en utilisant le module d'envoi, le troisième message étant utilisé pour ordonner à la première DGW d'attribuer l'adresse IP de destination au dispositif terminal, et après la réception, en utilisant le module de réception, d'un quatrième message qui est renvoyé par la première DGW et qui transporte l'adresse IP de destination, le renvoi, à la MME en utilisant le module d'envoi, du deuxième message transportant l'adresse IP de destination.

9. Élément de réseau de commande selon la revendication 6, les informations de segment d'adresse du premier segment d'adresse comprenant un identifiant du premier segment d'adresse, et le module d'envoi étant en outre configuré pour :
envoyer les informations de segment d'adresse du premier segment d'adresse à un serveur de protocole de configuration hôte dynamique, DHCP, de sorte que le serveur DHCP spécifie le premier segment d'adresse dans un groupe de ressources d'adresse en fonction des informations de segment d'adresse du premier segment d'adresse.

10. Élément de réseau de commande selon la revendication 9, le module de traitement étant en outre configuré pour réaliser l'une des étapes suivantes :
l'obtention de l'identifiant du premier segment d'adresse à partir du serveur DHCP en utilisant le module de réception, et après la réception, en utilisant le module de réception, d'un premier message de demande envoyé par la MME, l'obtention, à partir du serveur DHCP en fonction de l'identifiant du premier segment d'adresse, de l'adresse IP de destination attribuée au dispositif terminal, et le renvoi de l'adresse IP de destination à la MME en utilisant le module d'envoi ; ou
l'obtention de l'identifiant du premier segment d'adresse à partir du serveur DHCP en utilisant le module de réception, et l'envoi de l'identifiant du premier segment d'adresse à la première DGW en utilisant le module d'envoi, de sorte qu'après la réception d'un cinquième message envoyé par le dispositif terminal, la première DGW obtient, à partir du serveur DHCP en fonction de l'identifiant du premier segment d'adresse, l'adresse IP de destination attribuée au dispositif terminal, et renvoie l'adresse IP de destination au dispositif terminal.
